(19) Europäisches Patentamt
European Patent Office
Office européen des brevets

(11) Publication number: 0 149 421
A2

(12) # EUROPEAN PATENT APPLICATION

(21) Application number: 84810568.0

(22) Date of filing: 20.11.84

(51) Int. Cl.[4]: H 01 M 4/60
H 01 M 6/18

(30) Priority: 16.12.83 EP 83810600

(43) Date of publication of application:
24.07.85 Bulletin 85/30

(84) Designated Contracting States:
AT BE CH DE FR GB IT LI LU NL SE

(71) Applicant: ELTECH SYSTEMS CORPORATION
470 Center Street
Chardon Ohio 44024(US)

(72) Inventor: Bannehr, Rudiger
Rue Adolphe Butini 15
CH-1202 Geneva(CH)

(72) Inventor: Wiaux, Jean Paul
Rte. Annecy 239
CH-1257 Croix de Rozon(CH)

(74) Representative: Cronin, Brian Harold John et al,
c/o DST SA 3, Route de Troinex
CH-1227 Carouge/GE(CH)

(54) **Solid state alkali metal-halogen cell.**

(57) A solid electrolyte cell comprises an alkali metal anode e.g. lithium, a halogen-containing organic polymer cathode and a solid electrolyte between the anode and the cathode. The cathode comprises iodine-containing vacuum cyclised polyacrylonitrile and the solid electrolyte is preferably lithium iodide and halogen-free vacuum cyclised polyacrylonitrile. Use of isotactic polyacrylonitrile, a method of making a cathode comprising iodine-containing vacuum cyclised polyacrylonitrile and novel methods of making the solid electrolyte cells comprising an alkali metal anode e.g. lithium, a halogen-containing organic polymer cathode and a solid electrolyte between the anode and the cathode are also disclosed.

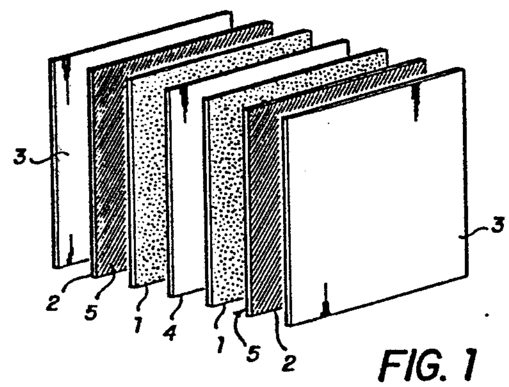

FIG. 1

EP 0 149 421 A2

# SOLID STATE ALKALI METAL-HALOGEN CELL

## Technical Field

This invention relates to a solid state alkali metal-halogen battery having an alkali metal anode e.g. lithium, a halogen-containing organic polymer cathode and a solid electrolyte between the anode and the cathode.

## Background Art

There were many attempts to provide a solid state high voltage, high energy density battery with long service life in low current drain applications. These attempts have been particularly encouraged in recent years, with the rapid advancement of electronics and the development of human implantable medical devices e.g. cardiac pacemakers. Solid electrolyte cells have long shelf lives and allow considerable flexibility in design, consequently various designs of solid state battery systems have been proposed. The solid state cells in general were attractive and reliable sources of power for devices which once installed were difficult to access.

In the last decade a lithium-iodine cell has been proposed as a reliable system that advantageously fulfills many of requirements mentioned. However, lithium-iodine cells of different designs that have been utilized so far encountered problems which may compromise

successful and reliable operation of a device driven by the cell.

One of the major problems experienced with such cells is the iodine leakage. Iodine in the cell is present in a mixture with an organic material forming a viscous complex paste which during the cell discharge starts to flow. Some iodine due to its very nature is present in vapour form. If iodine migrates and flows through the cell, the nominal capacity of the cell decreases either through a loss of iodine which reacts with lithium in an uncontrolled manner or through short circuiting with the anode current collector.

Another problem of all solid electrolyte cells in general and the lithium-iodine cells in particular is related to an inherent limitation of all electrochemical cells with a solid electrolyte. The problem is their limited current delivering capacity i.e. a relatively low current drain of the cell. Among the factors determining current delivering capability is the electrode/electrolyte interface. During discharge Li atoms are oxidized and the cation formed diffuses to the cathode leaving a vacant site behind. The vacant sites left by the diffusing ions must be filled by diffusion of fresh metal atoms into the vacancies. The diffusion of the fresh metal atoms to the vacant sites or the rate of their depletion at the electrode/electrolyte interface determines the rate at which the cell can be discharged. In addition other problems experienced with lithium-iodine cells such as the anode contraction and cathode expansion during discharge of the cell, the conduction characteristics of the solid electrolyte, etc. are areas which still need adequate solutions. With the development of devices driven by lithium-iodine cells

e.g. advanced pace makers, etc. has further increased the demand for reliable solid state cells which can operate at higher current densities for prolonged periods of time.

Many attempts were made towards a construction of the cell with improved performance and greater reliability but so far these attempts have been only partially successful (see for example US Patents 3 660 163, 3 660 167, 3 817 791, 3 957 533, 3 994 747, 4 007 122 and 4 182 798).

## Disclosure of Invention

The main aspects of the invention set out in the accompanying claims are based on the finding that a solid composite material formed by reacting an organic polymer containing cyclised acrylonitrile units with a halogen, especially iodine, has excellent and unexpected properties when used as a cathodic material in a lithium-iodine battery.

According to the invention, the organic polymer cathode, preferably of polyacrylonitrile (PAN), contains cyclised acrylonitrile units which are reacted with halogen molecules. When cyclised PAN is exposed to a halogen vapour or a halogen-containing solution the cyclised material reacts with halogen molecules and forms a compounded polyacrylonitrile-halogen material.

The exact nature of the chemical interaction and hence bonding between the cyclised PAN and halogen is not absolutely clear. The material obtained by interaction of cyclised acrylonitrile with halogen gives indications of

a redox type of interaction. It is believed that this may be the case since the cyclised PAN is a conjugated polymer i.e. polymer with conjugated unsaturation along the main chain. It is known in the art of polymers that organic polymers with conjugated double bonds (unsaturation) along their backbone chains are both oxidizable and reducible to p- or n-type doped materials and that the electrical conductivity of such materials is proportional to the degree of doping induced by oxidation or reduction. In the case of cyclised polyacrylonitrile, due to the presence of iodine, p-type doping may be possible. The doping occurs through a mechanism in which an electron is withdrawn from the polymer chain, the oxidation state of the cyclised PAN is increased and an anion ($I_3^-$) formed. As electrical neutrality of the system must be maintained the counter anions formed are attracted by the cation and a highly stable ionic compound formed. Cyclised PAN-iodine formation may further be illustrated by the following sequence of chemical reactions of polyacrylonitrile:

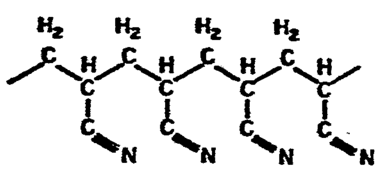

Polyacrylonitrile

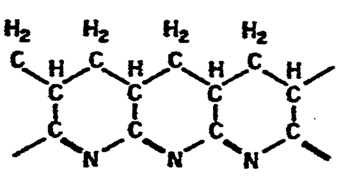

Cyclised polyacrylonitrile

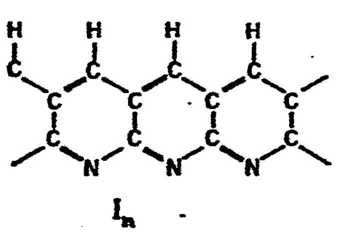

Cyclised polyacrylonitrile doped with iodine

The complex obtained by the interaction between the cyclised PAN and halogen has electrical conductivity of more than $10^{0}(ohm^{-1}cm^{-1})$ as opposed to $10^{-12}$ $(ohm^{-1}cm^{-1})$ for noncyclised, and $10^{-6}$ $(ohm^{-1}cm^{-1})$ for cyclised halogen-free polyacrylonitrile.

Cyclised polyacrylonitrile may be formed from polyacrylonitrile by several methods e.g. a thermal treatment at elevated temperature of up to 900°C in an inert atmosphere or chemical cyclisation by nucleophylic attack in a solution such as dilute caustic. However, cyclisation of polyacrylonitrile according to the invention is preferably carried out in vacuum and the material thus obtained is called vacuum cyclised polyacrylonitrile. It has been found that the material obtained by vacuum cyclisation exhibits a high degree of halogen uptake which is of a paramount importance for production of reliable electrochemical cells with halogen-containing polyacrylonitrile as cathode material. It has also been found that when as a starting material isotactic polyacrilonitrile is used the material obtained after cyclisation has superior properties such as a higher degree of halogen uptake, a higher rate of cyclisation, better mechanical flexibility, etc.. Isotactic polyacrylonitrile is therefore excellently suitable for production of electrochemical cells with halogen-containing polyacrylonitrile as a cathode.

It has been found that different elements in the halogen group form conducting complexes with vacuum cyclised polyacrylonitrile. However, electrical conductivity of the lithium salts is decreasing in the series: iodide, bromide, chloride. The best results in making an electrochemical cell according to the invention are thus obtained when vacuum cyclised PAN is reacted with

iodine but excellent results are also obtained with bromine. Experiments carried out with isotactic polyacrylonitrile in place of standard polyacrylonitrile have shown that the isotactic material has superior characteristics in terms of cyclisation, halogen uptake and when used as a cathode material considerably better electrochemical performance.

The cell of the invention is produced most conveniently with an anode of a commercially available lithium; however different alloys of lithium and other alkali metals may also be employed.

The cell according to the invention includes a container for the cell components, an alkali metal anode suitably placed within the container, a cathode component comprising halogen-containing cyclised acrylonitrile units preferably vacuum cyclised polyacrylonitrile and a solid electrolyte usually containing a halogen-free vacuum cyclised polyacrylonitrile between the respective operative surfaces of electrodes. The cathode component may further contain dehydrated $Al_2O_3$ particles and/or a halogen-free vacuum cyclised polyacrylonitrile in an amount of up to 50% by weight. The container is of material which does not react with the cell components and is molded or otherwise formed to a desired configuration. Suitable electrical contact is made to the anode and the cathode by means of current collectors which are connected to external electrical circuit directly or through other suitable electrical contacts. In cases where it may be necessary to have very thin cells the material of the container may be electrically conductive and may advantageously be used as means for current collection.

Another feature of the invention is a solid

electrolyte formed between the anode and the cathode surfaces comprising lithium iodide and halogen-free cyclised acrylonitrile-containing polymer, preferably vacuum cyclised polyacrylonitrile which is advantageously applied to the anode surface before the anode is contacted with the iodine-containing polyacrylonitrile cathode. The halogen-free vacuum cyclised PAN is either brushed on from a dispersion containing the vacuum cyclised powder and/or fibers, or is a film casted directly onto the metal anode or onto a glass plate and subsequently transferred onto the anode.

In this application by "halogen-free vacuum cyclised PAN" we mean an organic polymer material containing vacuum cyclised acrylonitrile units which is not exposed to or reacted with a halogen in vacuum prior to assembly of the cell. Once in the cell this material may take up halogen atoms and in this case the halogen will further react with alkali metal to form the solid electrolyte.

It has been observed that by applying one coat of a given solvent/halogen-free vacuum cyclised PAN dispersion onto the anode the life time of the battery is greatly improved. The thickness of this coating is conveniently about 50 µm; however thicker as well as thinner coatings may also be used.

Further improvements of the battery performance are advantageously obtained when dehydrated $Al_2O_3$ is added to the halogen-free vacuum cyclised PAN solution or copolymer film, prior to contacting with the lithium anode.

It has also been found that PAN or PAN copolymer films of the invention when obtained by brushing, spraying or casting of solutions prepared by dissolving non cyclised

PAN powders, fibers, copolymers and/or mixtures thereof in dimethylformamide or other convenient solvent are excellently suited for the production of preformed foils of solid electrolyte or the cathode itself. After drying (preferably but not exclusively in vacuum), these films are vacuum cyclised and, further depending on their subsequent use, exposed to halogens.

To prepare these polymer films different PAN copolymers may be used such as copolymers with butadiene or alkylacrylate (e.g. methylmetacrylate). However, useful films may also be produced with polymer blends prepared from pure polyacrylonitrile and a polyacrylonitrile copolymer.

The total concentration of the non acrylonitrile comonomer may vary in a wide range of concentrations; however the optimal balance of mechanical properties and halogen uptake for preformed films is achieved when the amount of non acrylonitrile comonomer is kept below 50 % by weight.

It has been observed that when a fine metal mesh (e.g. nickel) is incorporated in polyacrylonitrile prior to cyclisation and doping the resulting cathode shows superior performance to the cathodes prepared by simple pressing of cyclised polyacrylonitrile powders. Cells incorporating cathodes with built in current collectors have shown better discharge characteristics than the cells produced without them. Analysis of the cathodes with the built in current collectors has shown that the operative surfaces of the electrode are highly developed and full of microholes and cracks, probably formed as a result of shrinking of polyacrylonitrile during cyclisation. Subsequent doping of the polymer has shown that the developed cracked polymer

surface can more readily be loaded with iodine. The cathodes with incorporated metal mesh have superior dimensional stability, better contact between the current collector and the active material and a more intimate contact at the electrode/electrolyte interface.

It has also been observed that a nominal capacity of lithium-iodine cells of the invention may upon discharge be restored by reversing the polarity of the cell and charging the cell back until 100 % of nominal capacity is reached. The charge-discharge cycles may be repeated several times with no apparent loss of cell performance. This was found to be of a particular interest at higher temperatures where the self discharge plays a significant role in determining the battery lifetime. Now it has been observed that the lifetime of the battery according to the invention may significantly be extended by simple recharging of the solid state cell.

The invention also provides novel methods of making a solid state alkali metal-halogen battery having an alkali metal anode, the halogen-containing organic polymer cathode and a solid electrolyte therebetween and in contact with said anode and cathode as set out in the claims and more particularly described below.

## Brief description of Drawings

Fig. 1 is a developed view illustrating the construction of a cell of the invention.

Fig. 2 is a schematic cross-sectional view of a variant of a lithium-iodine cell of the invention.

Fig. 3 is a graph showing a comparison of discharge curves obtained for cells as described in Example II (Curve B) and a state-of-the-art cell (Curve A).

Fig. 4 is a graph showing discharge curves for cells as described in Example III.

Fig. 5 is a graph showing comparison of cell voltage vs. iodine utilization for a cell comprising a film cathode as described in Example IV (Curve E) and a cell comprising a PAN pellet cathode of Example I (Curve F).

## Best modes for carrying out the invention

Referring to Fig. 1, the cell comprises metal anode contact members or current collectors 3, alkali metal anodes (e.g. of lithium) 2, organic polymer halogen-containing cathodes 1, and a cathode current collector 4. Optionally there are organic polymer halogen-free coatings 5 on the surfaces of anodes 2 facing the cathode 1. The cell components are pressed together and the stack obtained is placed in a suitable cell casing (not shown). The cathode current collector 4 is made by spot welding a fine metal screen or mesh (e.g. nickel) to a metal conductor and is sandwiched between two cathode discs 1. Prior to assembly into the cell, the cathode material is either compacted from a powder or first casted as a film and then formed into a desired shape. Formation of a solid electrolyte is achieved by reacting in situ a halogen from the cathode with the alkali-metal anode. Disadvantages associated with formation of the solid electrolyte in some cases can be avoided by coating the anode 2 with an organic halogen-free acrylonitrile containing film 5. The halogen-free

acrylonitrile containing polymer film presumably reduces the rate of iodine migration from the cathode thus preventing a spontaneous uncontrolled chemical reaction between iodine and lithium. It is not clear in which way the halogen-free acrylonitrile containing film reduces iodine migration and whether during the cell discharge this material absorbs excess of iodine by reacting with the halogen, simply serves as a physical barrier or both. Nevertheless, it is found that in many cases the halogen-free acrylonitrile containing polymer has a beneficial effect to the discharge characteristics of the cell. The metal anode 2 is most conveniently lithium metal foil but it may also be made by a deposition of lithium onto anode current collectors by any convenient method. The organic cathode material is a vacuum cyclised polyacrilonitrile-containing polymer which may be in pure or copolymer form and may further be a powder or a film. The cell casing is of some suitable inert hydrophobic material impervious to halogen and atmospheric gases.

Referring to Fig. 2 a relatively thin lithium-iodine cell of the invention may be made by dissolving polyacrylonitrile in an adequate solvent (e.g. dimethylformamide), pouring the solution into a metal cup 11, drying of the polyacrylonitrile layer 12, heating the layer in a vacuum to at least partially cyclise the polyacrylonitrile and expose the cyclised PAN layer to iodine to form the cathode. The cathode formed in this way has a good electrical contact with the metal cup 11 which then serves as the cell casing and a current collector. Alternatively a current collector may be placed in the cup before pouring dissolved PAN. Typically, the metal cup 11 is made by punching out a foil of pure nickel but other convenient metal foils may also be employed. After the cathode formation, a coated or uncoated lithium anode 13 is

brought into a contact with the cathode, an insulating seal 14 placed around the edge of the cup and the cell closed with a metal cover 15. As shown in Fig. 2, the cover 15 serves also as the anode current collector.

The cell and the preparation of composite materials for use as a cell component according to the invention will be further illustrated by the following examples:

## Example I

Pure polyacrylonitrile (PAN) noodles or polyacrylonitrile with 6 % wt of methylmetacrylate available from DuPont as PAN A and PAN A7 respectively were crushed in a mortar to give a fine powder. The powder was introduced into a quartz tube and heated in a vacuum (between $10^{-1}$ and $10^{-3}$ Torr) to a temperature between 200-400°C. The sample was heated to the final temperature with a rate of approximately 1°C/min. Upon reaching the final temperature the heat treatment was continued at constant temperature for 1 to 20 hours. Upon complete cyclisation of the PAN material the sample was cooled, removed from the tube, crushed in a mortar and introduced into a glass reactor containing crystals of iodine.

The reactor was evacuated by means of a vacuum pump to approximately $10^{-2}$ Torr, the reactor disconnected from the pump and heated. The iodine vapour pressure in the reactor was maintained at an optimum level by controlling the temperature in the reactor. A temperature of about 80°C was maintained for several hours.

The uptake of iodine was varied by varying the amount of iodine in the reaction vessel and the heat duration. Heat was supplied to the reactor typically for two to sixteen hours.

Iodine uptake by the cyclised polyacrylonitrile was measured by measuring the weight of the polymer sample before and after its exposure to iodine. Maximum load of iodine found in the vacuum cyclised polyacrylonitrile sample was approximately 83 % by wt. (recalculated on the total weight of the cyclised material) which corresponds to an uptake of about one molecule of iodine per unit of cyclised acrylonitrile in the polymer matrix.

After the iodine treatment the iodine-containing powder was pressed into a cathode pellet about 0.5 mm thick, and 25 mm diameter. The cathode pellet obtained had an iodine equivalent discharge capacity of 0.53 Amp hours.

A cathode current collector was sandwiched between two iodine-containing PAN cathode pellets and two lithium anode discs (25 mm in diameter) pressed against operative surfaces of the cathode sandwich. A stack formed in this manner was then introduced into a casing comprising two anode current collectors. The casing was closed and the cell was then discharged with a current density of 10 $\mu A/cm^2$. The cell showed excellent discharge characteristics. A second cell made according to this Example using PAN fibers instead of PAN powder showed similar discharge characteristics.

## Example II

Vacuum cyclised PAN containing 83 % wt of iodine

prepared according to Example 1 was admixed with pure iodine in 1:10 ratio. The total iodine content in the sample thus obtained was 90 % by weight.

A cathode pellet was prepared by pressing the mixture and a cell assembled as described in Example I except that the lithium anode plates were coated with a thin film of vacuum cyclised iodine-free polyacrylonitrile.

The discharge current density was 10 $\mu A/cm^2$. The discharge curves for a state-of-the-art cell having a poly-2-vinylpyridine iodine-containing cathode (Curve A) and the cell herein described (Curve B) are presented in Fig. 3. The state-of-the-art cell and the cell of the invention were compared at the same iodine loadings. As may be seen, the cell of the invention showed superior discharge characteristics to the state-of-the-art cell.

## Example III

Two cathodes were made by pressing a mixture of 0.25 g of vacuum cyclised iodine containing PAN with 2.5 g of iodine and 0.25 g dehydrated aluminium oxide and a cell was assembled as in Example I. The cell discharged at 10 $\mu A/cm^2$ rate showed a higher average discharge voltage but a shorter life time than the cells of Examples I and II. Typical discharge curves for the cell with dehydrated $Al_2O_3$ (Curve D) and without dehydrated $Al_2O_3$ (Curve C) are given in Fig. 4.

Example IV

Polyacrylonitrile and Perbunan-N (a trade name of Bayer for a copolymer of 37 % by wt of polyacrylonitrile and 63 % by wt of polybutadiene) were dissolved in dimethylformamide. The solution containing 5 % by wt of each component was cast on a glass plate and the solvent was vacuum dried at 60°C. After drying the plastic film produced was vacuum cyclised and exposed to iodine vapour. The iodine uptake of the polymer film was 78 % by wt of iodine.

The film was brought in contact with a nickel screen cathode current collector and the cell then assembled according to Example I.

Several polymer films were produced varying both the components and their concentrations in the solution. The range of concentrations of the components in the solution was varied between 3 and 20 % by wt.

Polymer films were produced with Perbunan and PAN A-7 by mixing either of them with at least 50 % of pure polyacrylonitrile in form of powder or fibers. The total weight of polyacrylonitrile in the mixture was at least 70 % by weight.

The thickness of films produced by brushing, spraying and casting of these copolymers was varied between 10 µm and 2 mm. Thicker films could also be made; however their use as a cathode material for the cell was found to be less practical.

Some of the PAN films produced according to this Example were further mechanically treated in such a way that a biaxial orientation of the polymer film structure was obtained. Subequent tests with films having the biaxial orientation have shown improved mechanical properties.

When the utilization of iodine is compared at standard discharge conditions (10 $\mu A/cm^2$) for the film (Curve E) and the pellet cathode (Curve F) as shown in Fig. 5, the advantage of the polyacrylonitrile film cathode is clearly demonstrated.

Alternatively, the cell of the Example may be further modified by introducing a film of halogen-free vacuum cyclised PAN material between the lithium anode and the copolymer film cathode.

## Example V

The procedure of Example I was repeated except that the vacuum cyclised PAN was not exposed to iodine vapour in the glass reactor but mixed in a mortar with iodine crystals or soaked in dimethylformamide solution of iodine. Cells assembled using this material showed performance similar to the cells described in previous Examples.

## Example VI

Particularly good results have been obtained with cells employing PAN film cathodes similar to those

described in Example IV but further incorporating a nickel mesh as a current collector. Operating at current densities higher than 100 $\mu A/cm^2$ (almost double the current densities obtained with the best state-of-the-art batteries) the cells made with these cathodes showed superior behaviour during the cell discharge. Analysis of cathodes with incorporated nickel current collector have shown that the amount of iodine stored in the polymer material was ten times that of the initial weight of polymer. This is approximately twice the amount obtained with the free standing film of Example IV.

These cells further showed very interesting results under pulse current discharge regime. Useful current densites of up to 350 $\mu A/cm^2$ were obtained with the cell voltage remaining above 2 volts. The duration of pulses was 15 seconds. After several pulses the cell was further discharged with a constant current. The cell discharged in this way did not show significant loss of capacity or useful lifetime.

## Example VII

The procedure of Example IV has been repeated except that polyacrylonitrile used as starting material was stereo specific i.e. isotactic. The stereo specific or isotactic PAN used in the experiment was prepared using a stereo specific catalysts. The cathode prepared with the isotactic PAN showed very good discharge properties and better mechanical stability. In addition to good mechanical and electrochemical properties use of isotactic PAN showed particular advantages during the cyclisation of the cathode material. Temperatures used during the cyclisation of the isotactic PAN material were about 100-150° C lower than for non isotactic PAN.

CLAIMS

1. A solid state alkali metal-halogen battery having an alkali metal anode, a halogen-containing organic polymer cathode and a solid electrolyte therebetween and in contact with said anode and cathode characterised in that the organic polymer contains cyclised acrylonitrile units to which at least part of the halogen is chemically bonded.

2. The solid state alkali metal-halogen battery of claim 1, wherein the organic polymer is vacuum cyclised polyacrylonitrile.

3. The solid state alkali metal-halogen battery of claim 1 or 2, wherein the polyacrylonitrile is isotactic polyacrylonitrile.

4. The solid state alkali metal-halogen battery of claim 1, 2 or 3, wherein the organic polymer cathode contains iodine.

5. The solid state alkali metal-halogen battery of claim 1, 2 or 3, wherein the organic polymer cathode is in film form.

6. The solid state alkali metal-halogen battery of claim 1, 2 or 3, wherein the organic polymer cathode is a film containing the cyclised polyacrylonitrile and a copolymer.

7. The solid state alkali metal-halogen battery of claim 1, 2 or 3, wherein a current collector is incorporated in the organic polymer cathode.

8. The solid state alkali metal-halogen battery of claim 1, 2 or 3, wherein the organic polymer cathode further contains a metal oxide filler.

9. The solid state alkali metal-halogen battery of claim 8, wherein the metal oxide filler is $Al_2O_3$.

10. The solid state alkali metal-halogen battery of claim 1, 2 or 3, wherein the alkali metal anode is made of lithium or a lithium alloy.

11. The solid state alkali metal-halogen battery of claim 1, 2 or 3, wherein the solid electrolyte is LiI, or LiI with a halogen-free cyclised acrylonitrile-containing polymer and/or $Al_2O_3$.

12. The solid state alkali metal-halogen battery of claim 11, wherein the halogen-free acrylonitrile-containing polymer is vacuum cyclised.

13. The solid state alkali metal-halogen battery of claim 12, wherein the halogen-free acrylonitrile-containing polymer is in film form.

14. A halogen-containing organic polymer cathode for a solid state alkali metal-halogen battery characterised in that the organic polymer contains cyclised acrylonitrile units to which at least part of the halogen is chemically bonded.

15. The organic polymer cathode of claim 14, wherein the organic polymer is vacuum cyclised polyacrylonitrile.

16. The organic polymer cathode of claim 14 or 15,

wherein the polyacrylonitrile is isotactic or a biaxially orientated polyacrylonitrile.

17. The organic polymer cathode of claim 14, 15 or 16, wherein a current collector is incorporated in the organic polymer.

18. The organic polymer cathode of claim 14, 15 or 16, wherein the organic polymer further contains $Al_2O_3$.

19. The organic polymer cathode of claim 14, 15 or 16, wherein the organic polymer is in film form.

20. The organic polymer cathode of claim 14, 15 or 16, wherein the organic polymer is a film containing cyclised polyacrylonitrile and a copolymer.

21. The organic polymer cathode of claim 14, 15 or 16, wherein the halogen is iodine.

22. A method of making a cathode of claim 14, comprising the steps of:

a) forming a layer of the acrylonitrile-containing polymer,
b) vacuum cyclising the acrylonitrile-containing polymer,
c) exposing the cyclised acrylonitrile-containing polymer to a halogen vapour to absorb halogen, at least part of the halogen being chemically bonded to the acrylonitrile, and
d) shaping the acrylonitrile-containing polymer into a flat cathode body.

23. The method of making a cathode of claim 22, further comprising incorporating a current collector into the layer of the acrylonitrile-containing polymer.

24. A method of making a solid state alkali metal-halogen battery having an alkali metal anode, a halogen-containing organic polymer cathode and a solid electrolyte therebetween and in contact with said anode and cathode comprising the steps of:

a) providing an alkali metal anode,
b) applying a surface coating onto at least one surface of the anode,
c) placing the anode and a cathode current collector in a casing in spaced parallel relationship,
d) introducing into the casing a cathode of a cyclised acrylonitrile-containing polymer with a halogen, at least part of which is chemically bonded to the acrylonitrile, and
e) bringing into operative contact the coated anode surface, the cathode surface and the current collector.

25. A method of making a solid state alkali metal-halogen battery having an alkali metal anode, a halogen-containing organic polymer cathode and a solid electrolyte therebetween and in contact with said anode and cathode comprising the steps of:

a) applying a layer of an acrylonitrile-containing polymer onto a cathode current collector,
b) vacuum cyclising the acrylonitrile-containing polymer,

c) exposing the cyclised acrylonitrile-containing polymer to halogen vapour to absorb halogen, at least part of the halogen being chemically bonded to the acrylonitrile,
d) providing an alkali metal anode,
e) applying a surface coating onto at least one surface of the anode, and
f) bringing into operative contact the coated anode surface with the cathode surface.

26. The method of making a solid state alkali metal-halogen battery of claim 24 or 25, wherein the anode coating is halogen-free cyclised acrylonitrile-containing polymer.

27. A method of making a solid state alkali metal-halogen battery having an alkali metal anode, a halogen-containing organic polymer cathode and a solid electrolyte therebetween and in contact with said anode and cathode comprising the steps of:

a) dissolving acrylonitrile-containing polymer in a solvent,
b) providing a metal container,
c) pouring the solution into the metal container to form a layer of acrylonitrile,
d) drying the polyacrylonitrile layer,
e) heating the layer in a vacuum to at least partially cyclise the polyacrylonitrile,
f) exposing the cyclised polyacrylonitrile layer to iodine thereby forming a cathode,
g) providing an alkali metal anode,
h) bringing the anode into intimate contact with the cathode,
i) placing an insulating seal around the edge of the container,

j) providing a metal cover, and

k) closing the cell.

28. The method of making a solid state alkali metal-halogen battery of claim 27, further comprising incorporating a current collector into the container before pouring of the acrylonitrile containing polymer.

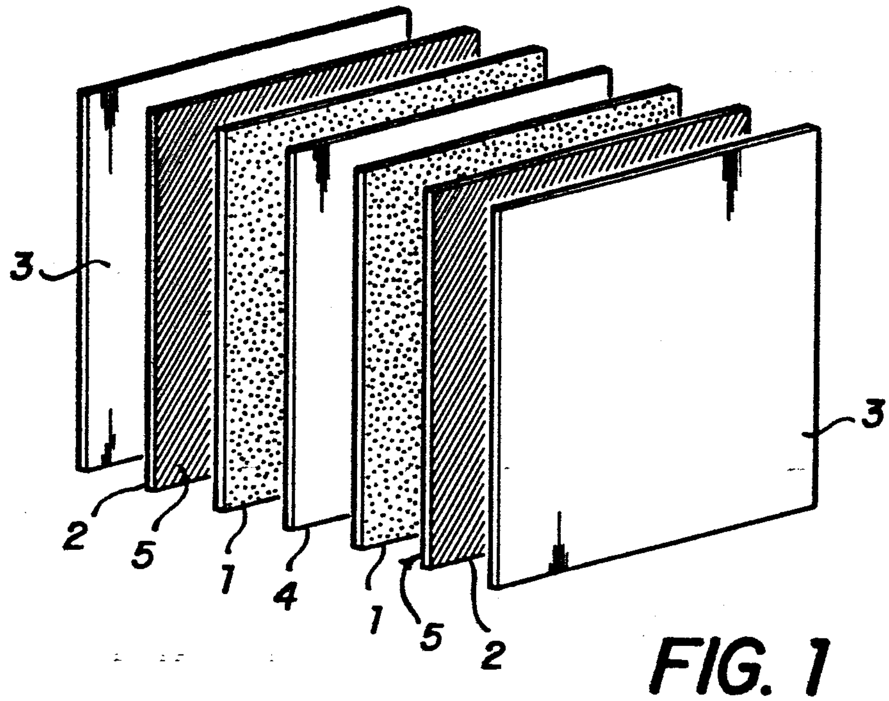
3
3
2
5
1
4
1
5
2

FIG. 1

FIG. 3

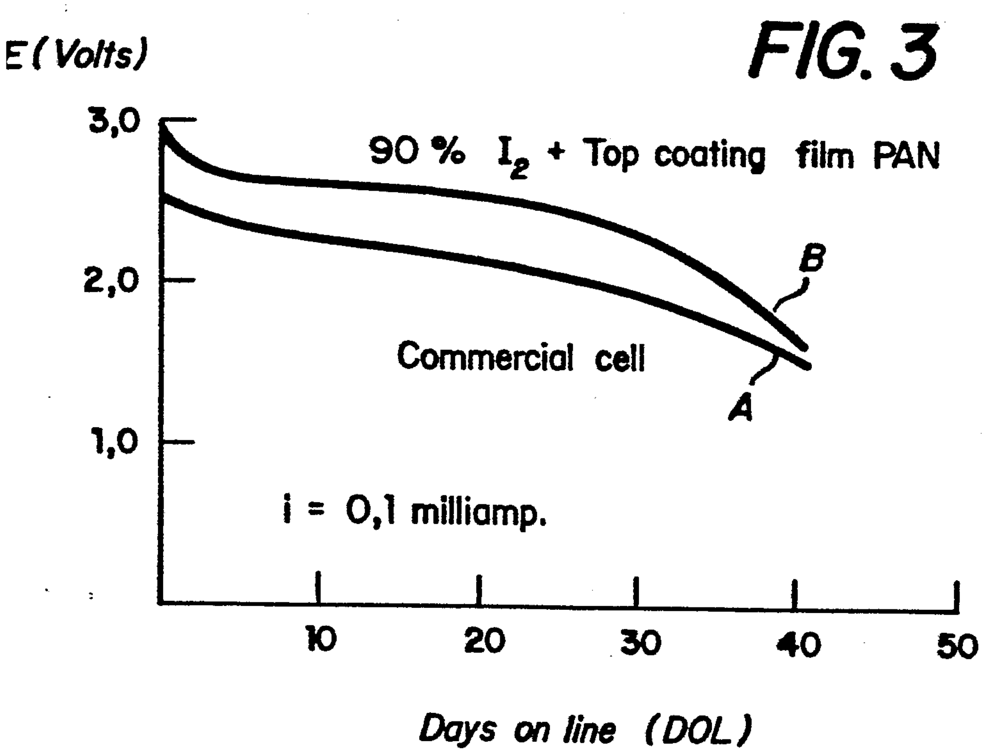
E (Volts)
3,0
2,0
1,0
90 % $I_2$ + Top coating film PAN
B
Commercial cell
A
i = 0,1 milliamp.
10
20
30
40
50
Days on line (DOL)

FIG. 2

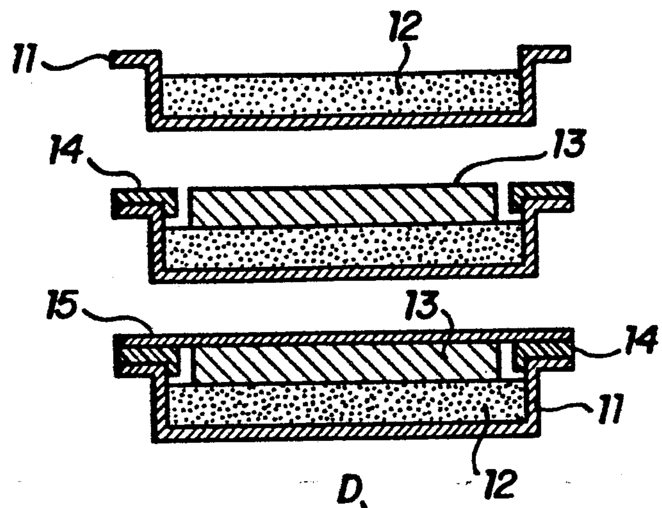


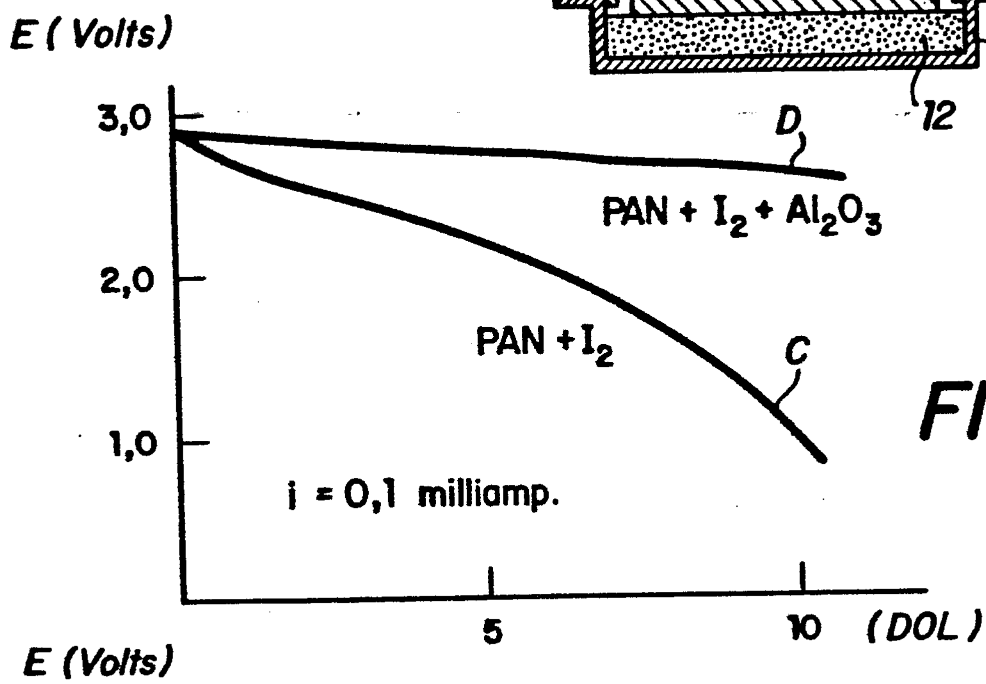


FIG. 4

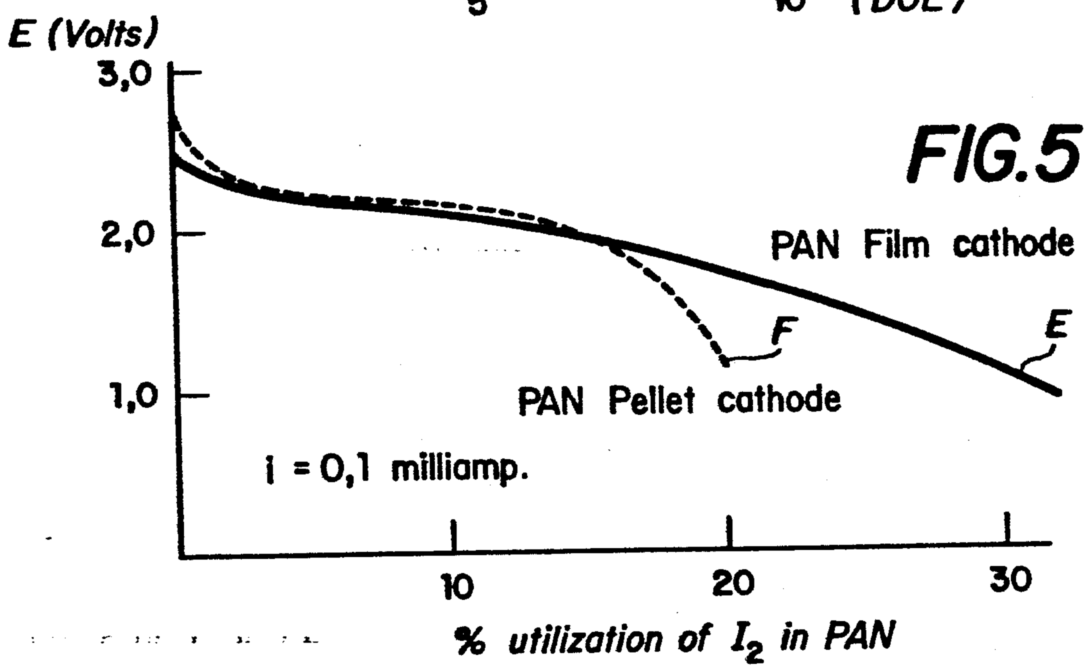


FIG. 5